# EUROPEAN PATENT SPECIFICATION

(11) **EP 3 734 135 B1**
(45) Date of publication and mention of the grant of the patent: **01.11.2023**
(21) Application number: 20172479.6
(22) Date of filing: 30.04.2020
(51) Int. Cl.: F16L 37/14

(54) **FLUID CONNECTOR**
FLUIDVERBINDER
CONNECTEUR DE FLUIDE

(30) Priority: 03.05.2019 DE 102019111535
(43) Date of publication of application: 04.11.2020
(73) Proprietor: Gealan Formteile GmbH, 95145 Oberkotzau (DE)
(72) Inventor: Saunus, Christian, 08223 Grünbach (DE); Buheitel, Christian, 95111 Rehau (DE)
(74) Representative: Fleuchaus & Gallo Partnerschaft mbB

(56) References cited:
- DE-A1- 3 440 753
- GB-A- 910 578
- US-A1- 2010 102 621
- US-A1- 2010 219 629
- US-A1- 2011 215 571

## Description

### Field

The present invention relates to a fluid connector for hydraulic or pneumatic systems, especially but not exclusively for hydraulically or pneumatically coupling two fluid conduits.

### Background

In some conventional hydraulic systems, inner and outer tube components are connected with a flat metal clamp. This clamp encloses the inner tube component by an angle which may be up to-or only marginally more than-180°.

Such prior art clamps are mounted in a radial direction inside a slot of the outer tube. By enclosing the inner tube by just over 180° the clamp is secured inside the slot by enclosing the inner tube. It is necessary to overcome the force in radial direction when disassembling the clamp.

Using such a metal clamp has several disadvantages. If the inner tube is connected to an outer tube produced by, for example, injection moulding, there are drawbacks in manufacturing. The slot geometry in the outer tube must be very thin because of the flat geometry of the metal clamp. As a consequence, a thin component must be employed in the mould to realize the slot geometry in the outer tube. This can give rise to increased maintenance requirements, owing to the thinness of the mould component.

Furthermore, the inner pressure of the tube components causes an axial force on the system that results in a side load because of the asymmetric contact surface of such clamps. Depending on the magnitude of this side load, there can also result a tilt angle between the tube components; hence, the components of the hydraulic assembly can be exposed to increased stress owing to this side load.

EP 1845299 describes a flexible locking element for connecting tube components. The locking element is constructed with several notches to realize the mounting process of the tube components in axial direction including a premounted locking element. The axial force loaded on the tube components, caused by inner pressure, causes a significant deformation of the locking component, that is weakened by several notches.

US 2010102621 A1 discloses a brake booster device for a motor vehicle brake system. The device has a travel limiting element that includes a pair of longitudinal legs connected by at least one transverse leg. Two dimensionally stable reinforcement braces extend along the longitudinal legs, and the transverse leg is of a damping material that surrounds the two longitudinal legs at least in sections.

DE 34 40 753 A1 discloses a line coupling with a coupling nipple insertable into a coupling sleeve. The nipple is locked in the sleeve by means of a U-shaped closure body that engages on the nipple behind a stop shoulder and interacts with guide surfaces on the coupling sleeve in such a manner that the closure body is acted on by the guide surfaces in its locking position, out of which it can be moved by means of pressure on a web of the closure body.

### Summary

It is an object of the present invention to provide a connector that ameliorates at least some of the drawbacks of the prior art mentioned above. This object is met by the connector of claim 1. Embodiments of the connector are defined in the dependent claims.

The invention provides a connector for forming a fluid connection between at least a first fluid conduit and a second fluid conduit. The inventive fluid connector comprises a body defining at least one aperture configured to receive an end of the first fluid conduit. The connector further comprises a locking element comprising a base and a pair of engagement arms extending therefrom, wherein the engagement arms are configured so as to accommodate the end of the first fluid conduit therebetween.

The locking element is configured to be at least partially received by a slot defined by the body and, when the end of the first fluid conduit is located within the connector, to engage the first fluid conduit so as to resist withdrawal of the first fluid conduit from the connector.

The two engagement arms are flexible engagement arms. The slot is defined in part by inner guiding surfaces of the body of the connector which are curved and concave to the first fluid conduit and are configured to maintain the engagement arms in position against the first fluid conduit. Furthermore, when the locking element is located in the slot and the end of the first fluid conduit is located in the body of the connector, the engagement arms are retained against the first fluid conduit and have respective lengths such that the locking element at least partially surrounds the first fluid conduit.

A fluid connector according to the present invention is an apparatus for forming a fluid connection between multiple components of a hydraulic or pneumatic system, for example for connecting elements such as flow measurement devices to other components of the system, or even for simply connecting pipes. There may be, for example, a device with internal and external parts (such as a heating device), which can be connected by using a fluid connector according to the invention. Therefore, the first and second fluid conduits according to the invention may be common conduits of known type, such as tubes that are to be connected by the connector to each other.

The connector comprises a body that can have any suitable shape adapted to have an aperture big enough to accommodate an end of a first fluid conduit. For example, the body can have a round or a square geometrical shape and the aperture can be arranged at any of the surfaces of the body. If, for example, the body has a rectangular cuboid shape the aperture can be located on any of the six sides of the body. The first and the second fluid conduits may be connected by the connector arranged on opposite sides of the body (viz. 180° apart), but need not be. In particular it is also possible and envisaged that the first and the second fluid conduit be connected to the connector such as to form substantially a right angle with each other (viz. ≅90° apart).

The engagement arms are configured so as to accommodate the end of the first fluid conduit therebetween, meaning that the engagement arms are wide enough-or sufficiently flexible to be spread so as to be wide enough-to accommodate the end of the first fluid conduit. If for example the first fluid conduit is a tube, then the engagement arms need to be configured or configurable so as to accommodate the diameter of the tube. According to one embodiment the engagement arms extend substantially symmetrically from the base of the locking element.

As mentioned above, the body of the connector defines a slot in which the locking element can be at least partially inserted. In use, the slot intersects the first fluid conduit, and may be transverse to the longitudinal direction of the first fluid conduit. However, it may alternatively be oblique to the first fluid conduit; the degree and direction of that obliquity can be selected to distribute the load on the locking element in a preferred manner.

When the end of the first fluid conduit is located within the connector, in particular received into the aperture of the body of the connector, and the locking element is at least partially located in the slot, the locking element engages the first fluid conduit so as to resist withdrawal of the first fluid conduit from the connector. Once the end of the first fluid conduit is received into the aperture and the locking element is inserted into the slot, the first fluid conduit is thus connected to the connector.

In certain hydraulic or pneumatic systems, such as those mentioned above, the inner pressure load of the fluid inside the conduits can exert an axial force on the fluid connector. The engagement arms of the locking element secure the first fluid conduit in axial position by absorbing such an axial force, hence by mounting the locking element inside the slot the first fluid conduit is secured in axial position.

The flexible engagement arms of the locking element are retained in a tangential direction around the outer diameter of the conduit. The engagement arms have a width in a radial direction such that there is on the one hand a sufficient axial contact surface to an axial attachment surface of the first fluid conduit and on the other hand also a sufficient axial contact surface to the body of the connector.

The connection strength of the connector of the present invention is augmented such that the connector can be used for fluid conduits in high pressure systems. This is due to the flexibility of the engagement arms, which enlarge substantially the enclosure angle of the engagement arms with respect of the first fluid conduit compared with existing arrangements. The flexibility of the engagement arms and their respective lengths allows the locking element to at least partially surround the first fluid conduit, increasing therefore the contact surface between the locking element and the first fluid conduit.

In existing connection mechanisms, the enclosure angle of the connecting component, generally a metal clamp, is significantly limited. The term "at least partially surrounding" in the current application is to be interpreted as including partially surrounding and fully surrounding a conduit. When the locking element partially surrounds a conduit by an angle substantially equal to 360°, then the locking element is regarded as fully surrounding that conduit.

According to the present invention the locking element is described as partially surrounding a conduit if it does so by an angle greater than 180° and more preferably greater than 200°. Advantageously the locking element partially surrounds the first fluid conduit by an angle of at least 200°, at least 250°, at least 270°, at least 300°, at least 320°, at least 330° or at least 340°. In various embodiments, angles between 340° to 350° (both inclusive) or between 350° to 355° (both inclusive) or even between 355° to 360° (both inclusive), and hence fully surrounding the conduit, are envisaged.

In particular the value of the angle with which the locking element at least partially surrounds the first fluid conduit can preferably be between 200° and 360°, 300° and 355°, 330° and 350°, or 340° and 345°, all values inclusive, and all angular values between the given boundary values understood to be disclosed to the skilled person.

It is envisaged that providing a locking element surrounding the conduit at larger angularvalues is preferable due to the better distribution of the axial force along the length of the locking element and in particular the engagement arms thereof, when the locking element is inserted in the slot and the inner pressure load applies against the connector.

According to the invention, the slot is defined in part by an internal surface of the body of the connector configured to maintain the engagement arms in position against the first fluid conduit. Hence, during the connection process of connecting the conduit to the connector, the flexible engagement arms are deformed in tangential direction by the internal surface of the slot and towards the surface of the end of the first fluid conduit.

In this way, once the locking element is inserted into the slot, and when the end of the first fluid conduit is received by the aperture of the body, the engagement arms are retained by the inner surface (in some cases, so as to transfigure the arms into substantially the outer shape of the first fluid conduit) and hence at least partially surrounding the first fluid conduit. If, for example, the first fluid conduit is a tube, the engagement arms may be deformed into substantially a ring that partially or fully surrounds the circumference of the first fluid conduit.

It is advantageous that the inner surface of the slot, viewed cross-sectionally, have a parabolic form (or in part a semi-circular form) so as to guide the engagement arms around the first fluid conduit. This is especially advantageous if the first fluid conduit is a pipe or a tube having a circular or elliptical cross section. Nevertheless, embodiments of the present invention are not limited to having an inner surface of cross-sectional parabolic or semi-circular form, as any form retaining and guiding the engagement arms around, so as to at least partially surround the first fluid conduit, fall within the scope of the invention.

In particular the base and the engagement arms of the locking element can have a predefined form, such as horseshoe-like, a U-form or any similar shape, prior to being located into the slot. If for example the engagement arms of the locking element are manufactured in a geometry that resembles a partial oval, hence forming-with the base-a horseshoe shape, the strain level of the engagement arms during the assembling process is reduced. This is because the deformation from the initial geometry to a geometry with the engagement arms in assembled position is reduced.

According to another embodiment of the present invention, the engagement arms are resilient and configured to be spread when inserted into the slot by the first fluid conduit and to assume a configuration once located in the slot such that the engagement arms contact the first fluid conduit.

In this embodiment, once the locking element is inserted into the slot, the flexible engagement arms are retained against the first fluid conduit at least in part by their inherent resilience.

Before inserting the locking element into the slot, the engagement arms must be spread so as to substantially clasp the first fluid conduit. Once the locking element is located in the slot and the first fluid conduit is inserted into the aperture, the engagement arms, depending on their resilience, girth the first fluid conduit with a determined strength. The force with which the engagement arms contact the surface the first fluid conduit depends on the diameter of the conduit with respect to the resilience of the flexible engagement arms.

A combination of an inner surface in the slot defined by the body and resilient flexible engagement arms is also encompassed by the present invention. Indeed, the inner surface of the slot can function as guiding element, guiding the engagement arms to the right position in which their resilient proprieties of the engagement arms can act in order to girth the first fluid conduit. Furthermore, the inner surface has a bounding and guiding role in order to guide the user of the connector to where the locking element and respectively the engagement arms need to be inserted in order to achieve an assembled state of the connector.

When both the inner surface and the resilient proprieties of the engagement arms are used to retain the engagement arms against the first fluid conduit, the locking element, once located in the slot, is forced against the surface of the first fluid conduit by its resilience and bound in a position at least partially surrounding the first fluid conduit by the inner surface.

According to a further embodiment of the present invention, the body of the connector is integral with the second fluid conduit. In a still further embodiment, the body is configured to threadedly engage the second fluid conduit, such as directly or facilitated by a threaded locking ring.

In a still further embodiment, the connector comprises a second aperture configured to receive an end of the second fluid conduit, a second slot defined by the body, and a second locking element comprising a second base and second pair of engagement arms extending therefrom and configured so as to accommodate the end of the second fluid conduit therebetween. The connector may also comprise further apertures configured to receive an end of fluid conduit as per the present invention.

In this embodiment, the second locking element is configured to be at least partially received by the second slot and, when the end of the second fluid conduit is located within the body, to engage the second fluid conduit so as to resist withdrawal of the second fluid conduit from the body

Thus, the locking of the second fluid conduit with respect to the connector occurs in the same way as for the first fluid conduit, in particular through a second locking element having a base and a second pair of flexible engagement arms. The second pair of engagement arms are also flexible and, when the second locking element is located in the second slot and the end of the second fluid conduit is located in the second aperture of the connector, the second pair of engagement arms is retained against the second fluid conduit, such that the second locking element at least partially surrounds the second fluid conduit.

In a further embodiment the connector comprises a single locking element which is configured to be inserted into the first and second slot for the first and second fluid conduit simultaneously. In this embodiment the single locking element comprises a single base having a first pair of engagement arms and a second pair of engagement arms extending therefrom; the first and the second pairs of engagement arms are capable of accommodating the first and second fluid conduits, respectively. When inserted into the slots the first pair of engagement arms and the second pair of engagement arms at least partially surround the first and second fluid conduits, respectively.

The contact between the locking element retained and the first fluid conduit may be sufficient, in certain applications, to adequately resist the withdrawal of the first fluid conduit from the body of the connector (owing to frictional forces).

However, according to an embodiment of the invention, the locking element is configured to engage an external flange or projection (e.g. a partial flange) of the first fluid conduit that is located proximate the end of the first fluid conduit, wherein engagement of the locking element and the flange or projection resists withdrawal of the first fluid conduit from the body of the connector.

Especially in cases of high-pressure conduits it is advantageous to have the locking element engage with a partial or full external flange of the conduit for supplementary connecting and locking of the first fluid conduit to the connector. In this way when the first fluid conduit is received into the aperture and the locking element is located in the slot, the engagement arms contact the flange of the first fluid conduit, impeding axial withdrawal of the first fluid conduit from the connector.

Hence, if the locking element does not withstand the fluid pressure in the conduit merely through the at least partially surrounding contact to the first fluid conduit by the engagement arms, the engagement with the flange by the engagement arms minimizes the risk of detachment of the first fluid conduit from the connector. This embodiment is useful as a supplementary safety mechanism also for low pressure conduits.

According to a further embodiment of the invention when located in the slot, the locking element is entirely within the slot.

There are some applications in which disassembly of the connector is unnecessary, so the locking element can be located entirely within the slot. This means that, in use, there is essentially no portion of the locking element outside the slot. This thereby reduces the space occupied by the connector, which can be advantageous-especially in applications with closely spaced components.

Furthermore, this arrangement minimizes the risk of the unintended dislodgement of the locking element.

According to a further embodiment of the invention the locking element comprises snap-lock elements and the slot includes complementary recesses for receiving snap-lock elements, such that, when the locking element is located in the slot, the snap-lock elements are received by and engage the respective recesses.

The connector may be exposed to external loads, such as due to vibration, when connecting the connector to the first fluid conduit. Therefore, in an embodiment the locking element when located in the slot is secured against radial movement by snap-lock elements to avoid an unintended dislodgement of the locking element.

In an embodiment the snap-lock elements are integral with the base of the locking element. This enables a smooth assembling of the locking element because there is no snapping force generated on the flexible engagement arms. A snapping force on the flexible engagement arms would cause a buckling load on the engagement arms, which would degrade substantially the stability of the locking element and consequently of the whole connector.

In one embodiment the snap-lock elements are integral with one or more levers which are integral with the base and/or the engagement arms of the locking element. By pushing on the actuatingsurface of the lever(s) in a substantially tangential direction, the snap-lock elements are released, which facilitates the removal of the locking element from the slot in a radial direction. By constructing the lever in a sufficient length, disassembly can be effected with a low actuating force. Therefore, an easy and ergonomic disassembly can be achieved. It is advantageous to require only a small actuating force for releasing the locking element and disconnecting the connector and first fluid conduit, especially in fluid units with reduced space and a difficult accessibility to the connector.

In another embodiment of the invention the lever or levers and the corresponding snap-lock elements are integral with the first fluid conduit.

In an alternative embodiment the snap-lock elements are defined by the body of the connector at the slot of the connector, and the corresponding recesses are integral with the locking element.

According to a further embodiment of the invention the locking element further comprise notches arranged on at least a section of the outer and/or inner surface, respectively, of the engagement arms. Conversely, this feature could be described as constituting the provision on the locking element of a plurality of teeth, on the outer and/or inner surface thereof-the aforementioned notches being defined by the space between such teeth. Thus, it should be appreciated that, according to the present invention, there need not be continuous contact between the locking element and the first fluid conduit (or between the locking element and the slot); there need only be sufficient contact to provide the desired impeding of withdrawal of the first fluid conduit from the connector.

In this embodiment the notches of the engagement arms increase the tangential flexibility of the locking element. The engagement arms may comprise respective areas of reduced wall thickness in a radial direction (with regard to the assembled geometry of the engagement arms). The respective areas of reduced wall thickness work substantially like a joint and realize high tangential flexibility, enabling a close at least partial surrounding by the locking element around the first fluid conduit. Flexibility increases by constructing a higher number of notches on the engagement arms.

Advantageously when the locking element at least partially surrounds the first fluid conduit, the notches are regularly spaced between 10° to 25° and preferably 12° to 20° from each other on at least a section of the outer and/or inner surface, respectively, of the engagement arms.

Conversely - when described with respect to the teeth defining the aforementioned notches- the teeth defining the notches are advantageously, regularly spaced between 10° to 25° apart (and some examples from 12° to 20° apart) on at least a section of the outer and/or inner surface, respectively, of the engagement arms.

These above-mentioned notches can be constructed on outer and/or inner side of the engagement arms. To enable a smooth assembling and disassembling process, in one embodiment, the notches are constructed just on the outer side of the engagement arms to realize a closed and uninterrupted contact surface related to the corresponding contact surface on the surface of the first fluid conduit. A slip-stick-effect during the engagement and disengagement is thereby avoided.

In a further embodiment the notches are constructed just on the inner side of the engagement arms to decrease the strain level of the engagement arms. By deforming the engagement arms in a substantially circular position, a compression load is caused on the inner surface of the engagement arms and a tensile load is caused on the outer surface of the engagement arms. In this embodiment the notches are constructed on the compression area. The stress concentration by the notch effect is less critical in a compression area instead of a tensile area, especially for a plastic component.

The locking element of the present invention can be manufactured from a first material, preferably a plastic material, and the body can be manufactured from a second material. The first and second material can be identical.

Further to this, the locking element itself can be manufactured from two distinct materials, namely a third material for the base, and a fourth material for at least parts of the engagement arms.

Preferably, the first material and the fourth material are selected so as to provide a certain flexibility of the engagement arms of the locking element to be guided around the conduit (e.g. by the shape of the slot) when the locking element is located in the slot. The first and fourth material can be identical.

Accordingly, the first and fourth materials may be selected from a group containing Polypropylene (PP), Polyamid (PA), Polyoxymethylene (POM), Polyketon (PK), Polyphthalamide (PPA), Polyphenylene sulfide (PPS) or the like materials, preferably having certain flexibility.

In particular, in a preferred embodiment, the first and fourth materials may be reinforced by pressure resilient reinforcement components immersed in the material, such as, for example, glass beads. The provision of such pressure resilient reinforcement components, while not substantially interfering with the required flexibility of the first and fourth material, leads to additional mechanical properties thereof by way of helping to make the material resilient against pressure. Specifically, glass-beads can significantly increase the pressure load resistance of the otherwise flexible material of the engagement arms, yielding engagement arms that are particularly resistant to axial forces acting on them caused by the internal pressure of the fluid conduit(s).

Similarly, the second material and/or the third material may also be selected so as to provide a certain flexibility in some embodiments, however, it may also be chosen to provide less flexibility than the first and the third material and, in particular, to provide more structural resiliency. Accordingly, the second and third materials may be selected from a group containing Polypropylene (PP), Polyamid (PA), Polyoxymethylene (POM), Polyketon (PK), Polyphthalamide (PPA), Polyphenylene sulfide (PPS) or the like materials.

In particular, in a preferred embodiment, the second and/or third materials may be reinforced by pull-resilient reinforcement components immersed in the material, such as, for example, glass fibre or other fibre material. The provision of these pull-resilient reinforcement components leads to additional mechanical properties thereof by way of helping to make the material resilient against pull or ply forces. Specifically, glass-fibre can significantly increase the pull and plying resistance of the material of the base and/or the body, yielding base and/or the body properties that are particularly resistant to pull or plying forces acting on them caused by inner pressure of the conduit(s).

According to a further embodiment of the present invention, the locking element is manufactured by multi-component (i.e. two or more component) injection-moulding, wherein the base is manufactured from the third material, and the flexible engagement arms from the fourth material.

The flexibility of the engagement arms may be realized by using a material with sufficient flexibility, such as one or more of the above-mentioned materials. However, the engagement arms may alternatively be constructed in a flexible geometry, such as by containing notches as described above. Combinations of these techniques are also envisaged.

In an even further embodiment of the invention, the connector comprises a handle connected to the base of the locking element, such that when the locking element is located in the slot, the handle protrudes from the slot.

In some applications of the connector, it may be desired to disassemble the connector, such as to exchange a sensor unit, a filter component, or the like. For such applications a handle may be connected to the base of the locking element. The handle facilitates the removal of the locking element from the slot and hence disassembling of the connection of at least the first fluid conduit and the connector. The handle enables also an easier and more ergonomic assembly.

According to a further embodiment of the invention the locking element comprises a connecting strap connecting the locking element (such as at a handle thereof) and the body of the connector.

Such a strap can be an additional component which is connected to the locking element and the body. Especially in applications with a difficult access to the connection mechanism such a connection is useful to simplify assembly and disassembly and to avoid forfeiting of the locking element.

In an embodiment in which the locking element and the connector are manufactured by injection moulding, the body of the connector, the strap and the locking element are produced in a single injection-moulding process.

According to a further embodiment of the invention the connecting portion of the handle with the base is provided with one or more breaking points to facilitate separation of the handle and the base of the locking element.

The handle thereby enables an easier insertion of the locking element into the slot and facilitates the breaking off of the handle afterwards to reduce the space of the connection mechanism or an incidental removal.

According to a further embodiment of the invention the handle is manufactured from the same material as the base.

In this further embodiment, the locking element is manufactured by multi-component injection-moulding whereby the base and handle are manufactured from the same material.

In a further possible step the outer surface of the handle is of a second substantially soft component, such as example thermoplastic elastomer, polyurethane, or the like, to improve the haptic properties of the handle.

In some known connection mechanisms, such as metal clamps, required disassembly forces depend substantially on the enclosure angle of the clamp around a conduit. Increasing the enclosure angle causes a significant higher assembling and disassembling force. In the present invention the disassembling force is essentially independent of the enclosure angle.

In an embodiment of the present invention the body is produced by injection moulding. In this case the width in axial direction of the slot of the body of the connector defines the wear resistance of the mould according to the area of the slot geometry. Finally, a higher axial thickness of the locking element reduces the maintenance effort of the mould component of the slot area of the body.

By increasing the axial thickness of the locking element, the strength of absorbing a shear load in an axial direction, which is caused by an inner pressure on the conduits, is respectively increased. A thin wall thickness in radial direction of the engagement arms enables their flexibility to realize a high surrounding angle around the first fluid conduit.

In a further embodiment, to obtain a fluid tight connection between the two conduits, the connector or the first fluid conduit comprises a seal (which may be an integrated seal), such as an O-ring or washer.

### Brief Description of the Drawing

In order that the invention may be more clearly ascertained, exemplary embodiments of the invention are hereafter described by reference to the accompanying figures, in which like numerals, if not otherwise specified, denote functionally or structurally like elements.
- Figure 1: is a schematic perspective exploded view of a fluid connector according to a first embodiment of the present invention, in a disengaged state, shown with first and second hydraulic conduits.
- Figure 2A: is a schematic front view of the fluid connector of figure 1 before engagement of its locking element.
- Figure 2B: is a schematic cross-sectional view in radial direction of the fluid connector of figure 1 in an assembled state.
- Figure 3A: is a schematic side view of the fluid connector of figure 1 in an assembled state with both hydraulic conduits.
- Figure 3B: is a schematic cross-sectional view in axial direction of the fluid connector of figure 1 in an assembled state with both hydraulic conduits.
- Figure 4A: is a schematic front view of a fluid connector according to a second embodiment of the present invention, in a disassembled state.
- Figure 4B: is a schematic cross-sectional view in a radial direction during the engagement of the locking element of the fluid connector of figure 4A.
- Figure 5A: is a schematic front view of a fluid connector according to a further embodiment, the fluid connector including an exemplary snap-lock element and an exemplary handle on the locking element.
- Figure 5B: is a schematic front view of a variation of the fluid connector of figure 5A (shown in a disassembled state), in which the handle includes a predetermined breaking point.
- Figure 5C: is a schematic front view of the variation of figure 5B, shown in an assembled state with handle broken off.
- Figure 6A: is a schematic front view of a fluid connector according to a further embodiment, including a retention strap for preventing the loss of the locking element when disengaged from the body of the fluid connector.
- Figure 6B: is a schematic front view of the fluid connector of figure 6A, in an assembled state.
- Figure 7A: is a schematic front view of an exemplary embodiment of the locking element.
- Figure 7B: is a schematic front view of a further exemplary embodiment of the locking element.
- Figure 7C: is a schematic front view of a further exemplary embodiment of the locking element.
- Figure 8A: is a schematic cross-sectional view in radial direction of an exemplary embodiment of the fluid connector in an assembled state.
- Figure 8B: is a schematic view of two hydraulic conduits with the fluid connector (including and the locking element) of figure 8A in an assembled state.
- Figure 9A: is a schematic cross-sectional view in a radial direction during the engagement of the locking element and body of a fluid connector according to an embodiment not covered by the claims.
- Figure 9B: is a schematic cross-sectional view of the embodiment of figure 9A after engagement of the locking element and body of the fluid connector.
- Figure 10A: is a schematic cross-sectional view of a fluid connector according to a still further embodiment of the present invention, shown with first and second hydraulic conduits.
- Figure 10B: is a schematic cross-sectional view of a fluid connector according to another embodiment of the present invention, shown with first and second hydraulic conduits.

### Detailed Description

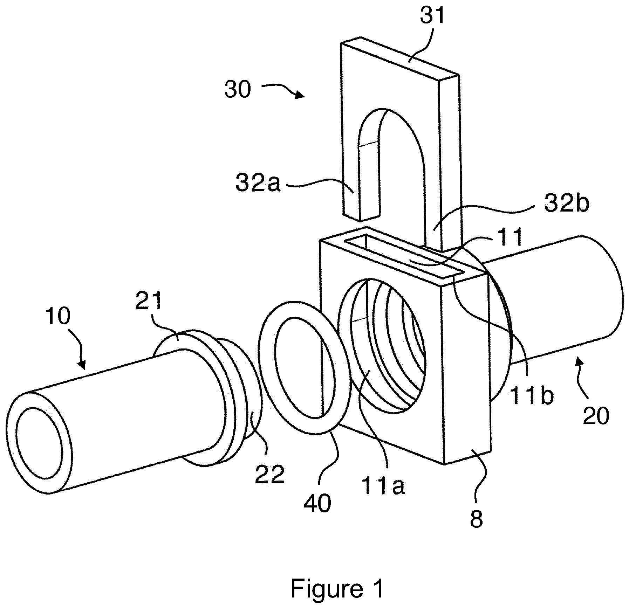

**Figure 1** is a schematic perspective exploded view of the fluid connector according to a first exemplary embodiment of the invention, shown with two hydraulic conduits 10, 20.

The fluid connector includes a body 8 and a locking element 30-which are depicted disengaged from one another. The locking element 30 includes a base 31 and two flexible engagement arms 32a, 32b (which, in this example, are generally parallel) extending from the base 31. The body 8 defines a slot 11 for receiving and accommodating most or all of the locking element 30.

In this exemplary embodiment a radial seal in the form of O-ring 40 is mounted on a cylindrical surface 22 of the end of the first hydraulic conduit 10. The first hydraulic conduit further comprises an external projection in the form of a flange 21 proximate the end 22 of the first hydraulic conduit. The first hydraulic conduit 10 provided with the seal 40 is inserted into an aperture of the body 8. The second hydraulic conduit 20 is integral with the body 8 and is positioned opposite to the aperture in the body 8 that receives the first hydraulic conduit 10.

When both hydraulic conduits 10, 20 are located in a predefined position relative to each other and in particular when the first hydraulic conduit 10 is located inside the aperture defined by the body 8 of the connector, the locking element 30 is urged into the slot 11 so that the engagement arms 32a, 32b straddle the end 22 of the first hydraulic conduit 10. The slot is defined in part by inner guiding surfaces 11a, 11b of the body 8, which are curved and concave to the first hydraulic conduit 10.

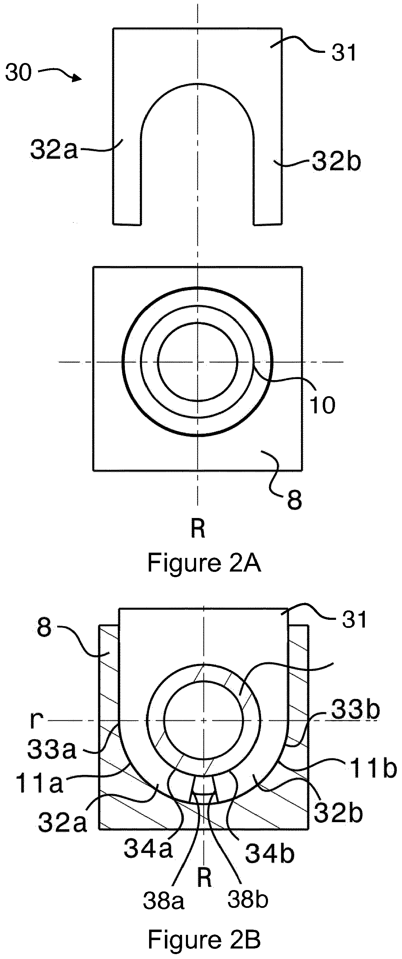

**Figure 2A** is a schematic front view of the fluid connector of figure 1 before engagement of the locking element 30 with the body 8. The locking element 30 is engaged in a substantially radial and substantially translational direction along the axis R into the slot 11 of the body 8. The locking element 30 comprises a substantially solid base 31 and flexible engagement arms 32a and 32b extending therefrom. The end 22 of the first hydraulic conduit 10 is inserted into the body 8 in substantial axial direction before inserting the locking element 30 into slot 11.

**Figure 2B** is a schematic cross-sectional view in radial direction of the fluid connector of figure 1 in an assembled state.

During the assembly of the locking element 30 and body 8, the outer surfaces 33a, 33b of the engagement arms 32a, 32b contact the inner guiding surfaces 11a, 11b of the body 8 in the slot 11. By providing a force in substantially translational and substantially radial direction along the axis R, on the locking element 30 the engagement arms 32a, 32b are deformed in substantially tangential direction, according to the first hydraulic conduit 10, once the distal ends 38a and 38b of the engagement arms 32, 32b pass the axis r. By this deformation of the locking element 30 the inner surfaces 34a, 34b of the engagement arms 32a, 32b contact and at least partially surround the substantially cylindrical surface 24 of the first hydraulic conduit 10.

The assembling process is concluded when the base 31 comes into contact with the cylindrical surface 24. In this position the locking element 30 substantially surrounds the first hydraulic conduit 10 and the distal ends 38a, 38b of the engagement arms 32a, 32b are substantially opposite each other with respect to the axis R.

In this exemplary embodiment the locking element 30 partially surrounds the first hydraulic conduit 10, spanning an angle of approximately 340°. However, in variations of this embodiment (and also in some other embodiments), the locking element 30 partially surrounds the first hydraulic conduit 10 by an angle ranging between 300° and 350°, such as between 310° and 340° and in particular between 320° and 330°. In some variations, the locking element 30 fully surrounds the first hydraulic conduit (i.e. spans substantially 360°).

It will also be noted that, in this example, the base 31 of the locking element 30 partially protrudes from the body 8 in the assembled state. This facilitates the withdrawal of the locking element 30, if required. Alternatively, however, the locking element 30 can be sized so that the base 31 does not protrude from the body 8 once assembled.

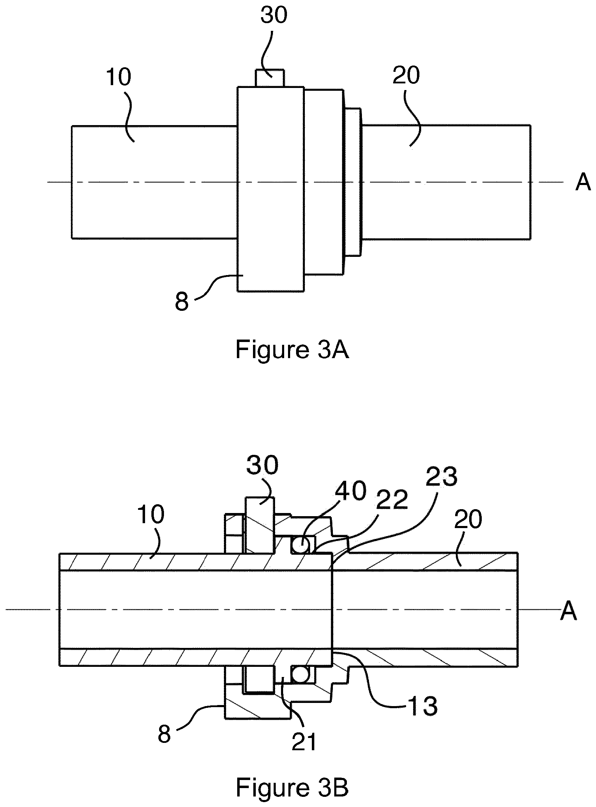

**Figure 3A** is a schematic side view of the first and second hydraulic conduit 10, 20 and the locking element 30 in an assembled state according to a first exemplary embodiment of the present invention. As can be seen, in this embodiment the locking element 30-in particular its base-protrudes from the slot of the body 8.

**Figure 3B** is a schematic cross-sectional view in axial direction of the connector of figure 3A in an engaged position of the locking element 30. The figure shows the first hydraulic conduit 10, second hydraulic conduit 20, locking element 30, and a seal 40.

The second hydraulic conduit 20 and the first hydraulic conduit 10 are engaged to each other in axial direction along the longitudinal axis A. In this embodiment the engagement in axial direction between both conduits 10 and 20 is limited by a blocking surface 23 of the first hydraulic conduit 10 contacting the blocking surface 13 of the second hydraulic conduit 20. In this embodiment the seal 40 is mounted on a cylindrical surface 22 of the end of the first hydraulic conduit 10 and is compressed in radial direction, to allow small axial movements between both conduits 10 and 20 without losing fluid tightness.

After engaging the locking element 30 inside the slot an axial movement between both conduits 10 and 20 is limited in both axial directions along the longitudinal axis A. Axial forces, which are caused by inner pressure on the hydraulic conduits 10 and 20, are transmitted by the locking element 30 between the first and second hydraulic conduits 10 and 20.

The first hydraulic conduit 10 further comprises a flange 21 such that the locking element 30 contacts the flange 31 of the first hydraulic conduit 10, further impeding axial withdrawal of the first hydraulic conduit 10 from the connector.

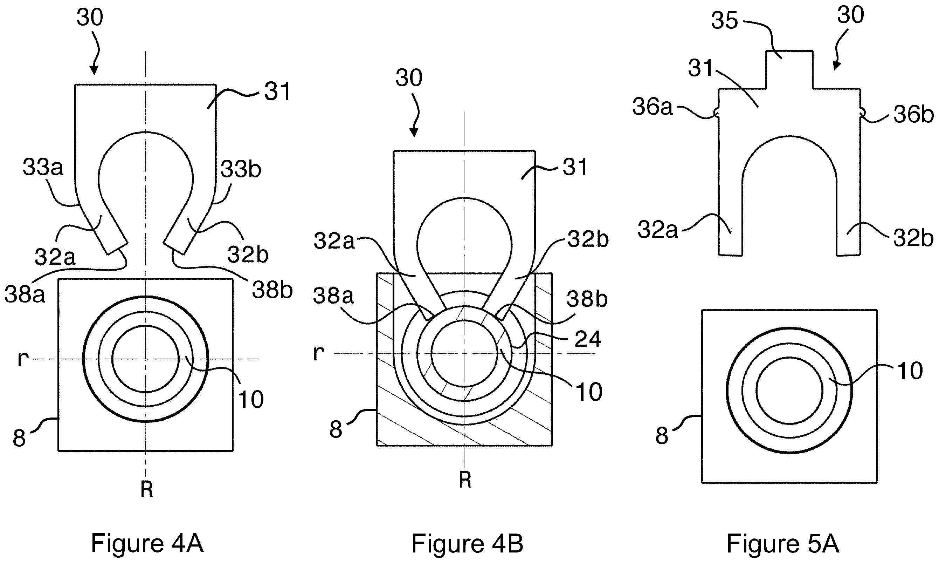

**Figure 4A** is a schematic front view of the connection mechanism according to a second embodiment, with the locking element 30 and body 8 of the connector disengaged. The engagement arms 32a, 32b of the locking element 30 are pre-shaped such that they converge (cf. the engagement arms of the embodiment of figure 1, which are essentially parallel in their relaxed position). Hence, when the engagement arms 32a, 32b of this embodiment are in their relaxed position, locking element 30 has a horseshoe shape. As a consequence, the deformation of the engagement arms 32a, 32b when located in slot 11 and at least partially surrounding the first hydraulic conduit 10 (as shown in figures 2A and 2B) is reduced, causing a lower strain load on the engagement arms 32a, 32b.

**Figure 4B** is a schematic cross-sectional view in radial direction during the engagement of the locking element 30 according to the second embodiment of the connector. The preformed shape of the locking element 30 requires the engagement arms to be spread in order to accommodate the first hydraulic conduit 10. As soon as the distal ends 38, 38b of the engagement arms 32a, 32b come into contact with the substantially cylindrical surface 24 of the first hydraulic conduit 10, an assembling force in substantially radial direction along the axis Ron the base 31 causes a deformation of the engagement arms 32a and 32b in a respectively tangential direction according to the first hydraulic conduit 10. This deformation enables the continuation of the engagement process. After the distal ends 38a, 38b pass the line r, engagement as described for figure 2B occurs.

**Figure 5A** is a schematic front view of a further embodiment of the connection mechanism including an exemplary snap-lock element and an exemplary handle 35 on the locking element 30. In this embodiment a handle 35 is integral to the base 31 of the locking element 30, such as to simplify the handling of the locking element 30 when inserting into the slot (not shown) of the body 8. In particular the disengagement of the locking element 30 out of the slot is greatly simplified by using the handle 35.

As can be seen in figure 5A, the locking element 30 further comprises two snap-lock elements 36a, 36b, which are integral to the locking element 30 and especially integral to the base 31 of the locking element 30. The snap-element elements 36a, 36b are received by and thereby engage complementary recesses in the body 8 (not shown).

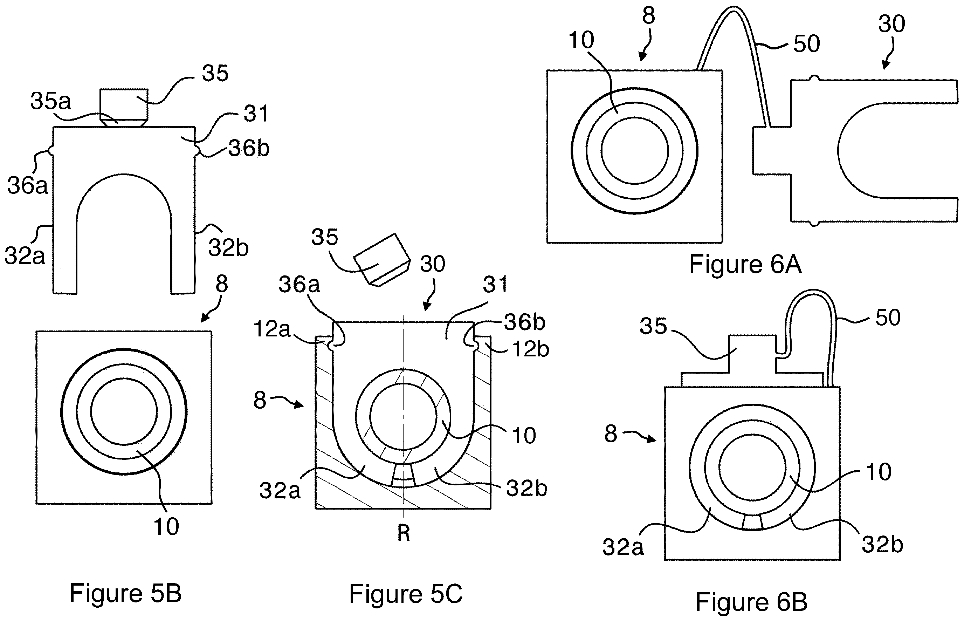

**Figure 5B** is a schematic front view of an embodiment of the handle area including a predetermined breaking point in a disengaged position of the locking element. As already depicted in figure 5A, the locking element 30 includes in this embodiment a handle 35. This enables an easy handling of the locking element 30 during the engagement into the slot of the body 8. In the connection between base 31 and handle 35 a predetermined breaking point 35a is constructed.

**Figure 5C** is a schematic front view of an embodiment of the handle including a predetermined breaking point in an engaged position of the locking element of Figure 5B. This is an exemplary embodiment in which the disassembling of connector is not necessary. After engaging the locking element 30 inside the slot of the conduit, the handle 35 can be broken off at the predetermined breaking point 35a (see figure 5B). Removing the handle 35 achieves the advantage of a reduced space of the connector. Such a reduced space can be important especially for conduits that are installed for example inside a wall, ceiling, or the like.

As can be seen in figure 5C, the snap-lock elements 36a, 36b are received by and thereby engage respective recesses 12a, 12b, so that the locking element 30 is only released when the disengagement force along the axis R exceeds a maximum threshold and the snap-lock elements 36a, 36b cannot withstand the force. The risk of the unintended disengagement of the locking element 30, such as due to vibration caused in a heating system or the like, is minimized, provided such vibrations do not exceed the disengagement threshold force.

**Figure 6A** is a schematic front view of an exemplary lose protection of the locking element in a disengaged position. The locking element 30 is connected to the body 8 by a flexible strap 50. In this embodiment of the connector, the strap 50 is integral to the locking element 30. In an assembly with limited and difficult access to the connection mechanism the strap 50 may be useful, in order to avoid losing the locking element.

**Figure 6B** is a schematic front view of an exemplary lose protection of the locking element 30 in an engaged position. The strap 50 is thin and flexible to facilitate the turning movement of the locking element 30 from position in figure 6A to the position in figure 6B. The locking element 30 is engaged inside the slot of the body 8 as described in above exemplary embodiments.

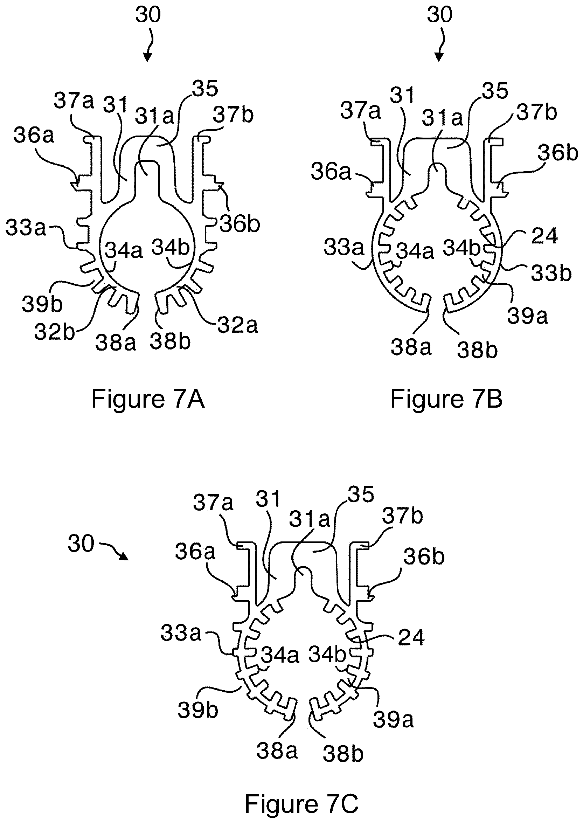

**Figure 7A** is a schematic front view of an exemplary embodiment of the locking element. The engagement arms 32a and 32b include several notches 33a on the outer side 39a, 39b to improve their flexibility.

In this embodiment the inner surfaces 34a and 34b of the engagement arms 32a, 32b comprise a flat surface without notches. The locking element 30 can thereby be engaged and disengaged smoothly, as the substantially cylindrical surface of the first hydraulic conduit 10 is in intimate contact with the inner surfaces 34a and 34b of the engagement arms 32a, 32b.

**Figure 7B** illustrates a schematic front view of the locking element 30 in a further exemplary embodiment, in which notches 39a are integrated on the inner side of the engagement arms 32. During the engagement and also in an engaged state of the locking element 30, the outer surface 33a, 33b are subject to a tensile load, the inner surface 34a, 34b of the engagement arms 32a, 32b are subject to a compression load.

Especially in an embodiment in which the locking element 30 is manufactured out of a plastic material, the tensile load is significant more critical than the compression load. The exemplary embodiment, depicted in figure 7B, enables a reduction of the critical tensile stress level on the outer surface 33a, 33b, because the outer surface 33a, 33b comprises no notches.

**Figure 7C** is a schematic front view of the locking element 30 in a further exemplary embodiment. As can be seen in figure 7C, the engagement arms 32a, 32b in this embodiment also comprise respective notches 39a, defined by the inner side of the engagement arms 32a, 32b, and notches 39b, defined by the outer side of the engagement arms 32a, 32b.

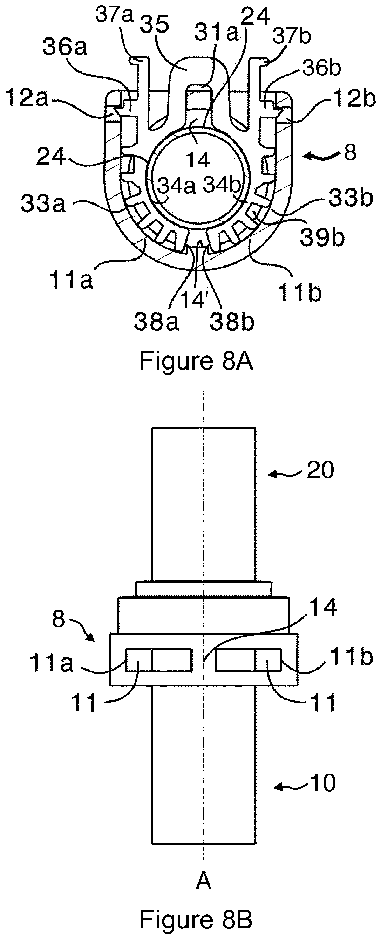

**Figure 8A** is a cross sectional view in a radial direction of body 8 and locking element 30 in an engaged state. The engagement arms 32a, 32b of the locking element 30 comprise notches 39b defined by the outer side of the engagement arms 32a, 32b.

In this embodiment, as also in the embodiments of figures 7A, 7B, 7C and 8, the locking element 30 includes two levers 37a, 37b integral with the base 31 and/or integral with the engagement arms 32a, 32b, respectively.

The levers 37a, 37b of this embodiment also comprise snap-lock elements 36a, 36b configured to engage complementary recesses in the body 8. The levers 37a, 37b protrude from the body 8 in the engaged position of the locking element 30. The lever 37a, 37b can be actuated to release the snap-lock elements 36a, 36b from the recesses in the body 8, enabling the disengagement of the locking element 30 without exerting an additional snapping force. The lever element 37 is actuated towards the handle 35 of the locking element 30. The handle 35 has also the function of limiting the actuation of the levers 37a, 37b avoiding thus a breakage of the levers 37a, 37b during disengagement of the locking element 30.

It will be noted that, in the embodiments of figures 7A, 7B, 7C and 8A, the base 31 of the locking element 30 is outwardly arched and thereby defines an inner notch 31a. This configuration means that, when the locking element 30 is positioned in slot 11, the base 31 protrudes from the body 8 of the connector, and that the notch 31a allows an option rib to extend across slot 11 and be accommodated by notch 31a.

Thus, **figure 8B** is a schematic view of both conduits 10, 20 and the body 8 of the connector according to such a variation, suitable for use with the locking element of any of figures 7A, 7B, 7C and 8A. The view of figure 8B is essentially from above slot 11. In this embodiment, the body 8 includes and is reinforced by an optional longitudinal rib 14 within and bridging the opening of slot 11; rib 14 is provided to absorb axial force. When the locking element 30 of any of figures 7A, 7B, 7C and 8A is inserted into slot 11 of this embodiment, rib 14 is accommodated by notch 31a such that notch 31a does not impede that insertion.

Accordingly, rib 14 reduces stress and deformation in the area of the slot 11. The first and second hydraulic conduits 10, 20 and slot 11 sustain an inner pressure load that imposes axial forces on those components. Optional rib 14 improves the strength of the body 8.

For the same reason, a further(or alternative) longitudinal rib 14' may be provided at the lower periphery of slot 11—in this embodiment, therefore, between the distal ends 38a, 38b of the engagement arms 32a, 32b. (It should be noted that either or both of optional ribs 14 and 14' may be provided in the other embodiments described herein.)

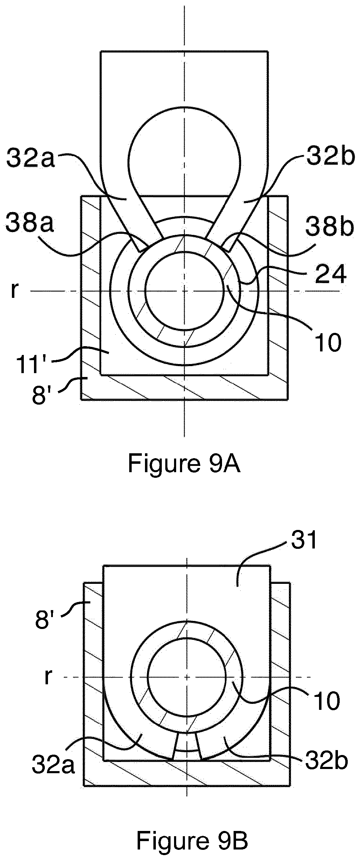

**Figure 9A** is a schematic cross-sectional view in a radial direction during the engagement of the locking element 30 and body 8' of the connector according to a further embodiment of the present invention. The locking element 30 comprises two resilient flexible engagement arms 32a, 32b which-in their relaxed position-form a horseshoe shape (comparable to the locking element of the embodiment of figures 4A and 4B). The locking element 30 has, as a consequence, a horseshoe-like shape. However, unlike the embodiment of figures 4A and 4B, the slot 11' of this embodiment does not define internal guiding surfaces, such as concave to the first hydraulic conduit 10, so the engagement arms 32a, 32b are maintained in contact with the first hydraulic conduit 10 only by their resilience.

**Figure 9B** is a schematic cross-sectional view of the embodiment of figure 9A after engagement of the locking element and body of the connector. During the assembling process of the locking element 30 the engagement arms 32a, 32b are spread around the circumferential surface 24 of the first hydraulic conduit 10 (see figure 9A), such that the distal ends 38a, 38b of the engagement arms 32a, 32b are guided around the first hydraulic conduit 10. Once the ends of the engagement arms pass the mid-line r of the body 8' of the connector and the locking element 30 is inserted still further into the slot 11' of the body 8', the resilience of the engagement arms 32a, 32b draws them inward towards the first hydraulic conduit 10 until, finally, they at least partially surround the first hydraulic conduit 10-as shown in this figure.

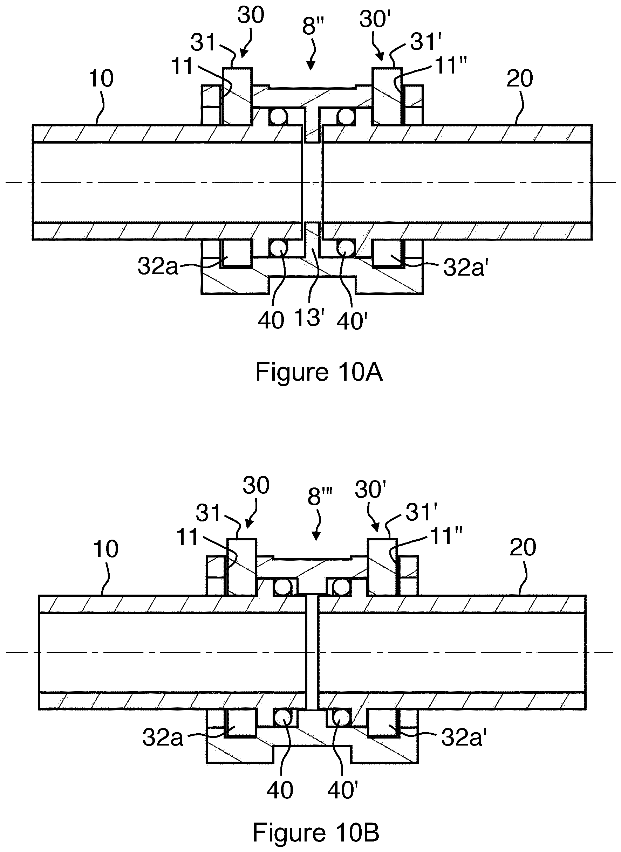

**Figure 10A** is a schematic cross-sectional view of a connector according to a still further embodiment of the present invention, shown with first and second hydraulic conduits 10, 20. In this embodiment, however, second hydraulic conduit 20 is not integral with the body 8" of the connector. The connector of this embodiment has a body 8" and two locking elements 30, 30', and the body 8" defines first and second slots 11, 11" configured to receive respective locking elements 30 and 30'; both locking elements 30, 30' are comparable to locking element 30 of the embodiment of figure 1 (though only a first engagement arm 32a, 32a' of each locking element 30, 30' is visible in this cross-sectional view).

The body 8" has two, opposed apertures for receiving the ends respectively of first hydraulic conduit 10 and second hydraulic conduit 20. Locking elements 30, 30', once in place in slots 11, 11", partially surround the respective conduits 10, 20 (by, for example, approximately 340°-as is the case in the embodiment of figure 1).

The body 8" of this embodiment comprises an internal flange in the form of an abutment 13' that provides blocking surfaces between the first and second hydraulic conduits 10, 20, such that the engagement in axial direction between both conduits 10 and 20 is limited by the abutment 13'. It will be noted that, in this embodiment, each of the first and second hydraulic conduits 10, 20 is provided with a seal (in the form of first and second O-rings 40, 40'), but in practice only one such seal may be required in some applications (and indeed none in others), depending on, for example, the nature and pressure of the fluid.

**Figure 10B** is a schematic cross-sectional view of a fluid connector according to a still further embodiment of the present invention, shown with first and second hydraulic conduits 10, 20. The connector of this embodiment is comparable to the fluid connector of the embodiment of figure 10A, except that body 8‴ of this connector omits an abutment (cf. abutment 13' of figure 10A).

Finally, it will be appreciated that many of the various individual features of each of the above embodiments of the invention, and of the various individual features of the embodiments described herein including in the claims, can be combined as suitable and desired. For example, the various optional features described by reference to figures 4A to 8B may be employed in the embodiment of figure 1, in the embodiment of figures 9A and 9B, in the embodiment of figure 9A, or in the embodiment of figure 9B.

It should be understood that the reference to prior art in this specification is not, and should not be taken as, an acknowledgement or any form of suggestion that the prior art forms part of the common general knowledge in any country.

In the claims that follow and in the preceding description of the invention, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments of the invention.

### Reference Numerals

- 8, 8', 8": body of the connector
- 10: first hydraulic conduit
- 11, 11': slot for receiving locking element
- 11a, 11b: guiding surfaces that engage engagement arms
- 12a, 12b: recesses for receiving snap-lock element
- 13: blocking surface
- 13': abutment
- 14, 14': longitudinal rib
- 20: second hydraulic conduit
- 21: flange
- 22: cylindrical surface receiving seal
- 23: blocking surface
- 24: cylindrical surface receiving locking element
- 30, 30': locking element
- 31: base of locking element
- 32a, 32b: engagement arms of locking element
- 33a, 33b: outer contact surface of engagement arms
- 34a, 34b: inner contact surface of engagement arms
- 35: handle
- 35a: predetermined breaking point
- 36a, 36b: snap-lock elements
- 37a, 37b: levers
- 38a, 38b: distal ends of engagement arms
- 39a: inner notches
- 39b: outer notches
- 40, 40': seal
- 50: connecting strap

## Claims

1. A connector for forming a fluid connection between at least a first fluid conduit (10) and a second fluid conduit (20), the connector comprising:
a body (8; 8'; 8", 8"') defining at least one aperture configured to receive an end of the first fluid conduit (10);
a locking element (30; 30') comprising a base (31) and a pair of engagement arms (32a, 32b) extending therefrom, the engagement arms (32a, 32b) being configured so as to accommodate the end of the first fluid conduit (10) therebetween;
the locking element (30; 30') being configured to be at least partially received by a slot (11) defined by the body (8; 8'; 8", 8‴) and, when the end of the first fluid conduit (10) is located within the body (8; 8'; 8", 8‴) of the connector, to engage the first fluid conduit (10) so as to resist withdrawal of the first fluid conduit (10) from the connector;
**characterized in that**
the two engagement arms (32a, 32b) are flexible engagement arms,
the slot (11) is defined in part by inner guiding surfaces (11a, 11b) of the body (8; 8'; 8", 8‴) of the connector which are curved and concave to the first fluid conduit (10) and are configured to maintain the engagement arms (32a, 32b) in position against the first fluid conduit (10), and
when the locking element (30; 30') is located in the slot (11) and the end of the first fluid conduit (10) is located in the body (8; 8'; 8", 8‴) of the connector, the engagement arms (32a, 32) are retained against the first fluid conduit (10) and have respective lengths such that the locking element (30; 30') at least partially surrounds the first fluid conduit (10).

2. A connector according to claim 1, wherein the locking element (30; 30') is configured to at least partially surround the first fluid conduit (10) by an angle of at least 200°, at least 250°, at least 270°, at least 300°, at least 320°, at least 330°, at least 340°, or between 340° to 350° (inclusive) or between 350° to 355° (inclusive), or between 355° to 360° (inclusive).

3. A connector according to any one of the preceding claims, wherein, during a connection process of connecting the first fluid conduit (10) to the connector, the engagement arms (32a, 32b) are deformed in a tangential direction by an internal surface of the slot (11) and towards the surface of the end of the first fluid conduit (10).

4. A connector according to any one of the preceding claims, wherein the engagement arms (32a, 32) are resilient and configured to be spread when inserted into the slot (11) by the first fluid conduit (10) and to assume a configuration once located in the slot (11) such that the engagement arms (32a, 32) contact the first fluid conduit (10).

5. A connector according to any one of the preceding claims, wherein the body (8) of the connector is integral with the second fluid conduit (20), or, alternatively, the body (8) of the connector is configured to threadedly engage the second fluid conduit (20).

6. A connector according to any one of claims 1 to 4, wherein the body (8"; 8‴) of the connector comprises a second aperture configured to receive an end of the second fluid conduit (20), a second slot (11') defined by the body (8"; 8‴), and a second locking element (30') comprising a second base (31') and a second pair of engagement arms extending therefrom and configured so as to accommodate the end of the second fluid conduit (20) therebetween;
wherein the second locking element (30') is configured to be at least partially received by the second slot (11') and, when the end of the second fluid conduit (20) is located within the body (8"; 8‴), to engage the second fluid conduit (20) so as to resist withdrawal of the second fluid conduit (20) from the body (8"; 8‴).

7. A connector according to any one of the preceding claims, wherein the locking element is configured to engage an external flange or projection (21) of the first fluid conduit (10) proximate the end of the first fluid conduit (10), wherein engagement of the locking element and the flange or projection (21) resists withdrawal of the first fluid conduit (10) from the body (8; 8'; 8", 8"') of the connector.

8. A connector according to any one of the preceding claims, **characterized in that** when located in the slot (11), the locking element (30; 30') is entirely within the slot (11).

9. A connector according to any one of the preceding claims **characterized in that** the locking element (30; 30') comprises snap-lock elements (36a, 36b) and the slot includes complementary recesses (12a, 12b) for receiving snap-lock elements (36a, 36b), such that, when the locking element (30; 30') is located in the slot (11), the snap-lock elements (36a, 36b) are received by and engage the respective recesses (12a, 12b).

10. A connector according to any one of the preceding claims, **characterized in that** the locking element (30; 30') further comprise notches (39a, 39b) arranged on at least a section of the outer (33a, 33b) and/or inner (34a, 34b) surface, respectively, of the engagement arms (32a, 32b).

11. A connector according to any one of the preceding claims, **characterized in that** the locking element (30; 30') is manufactured from a first material and the body (8; 8'; 8", 8‴) is manufactured from a second material, and/orthe base (31) of the locking element (30; 30') is manufactured from a third material and at least parts of the engagement arms (32a, 32b) are manufactured from a fourth material, and wherein, the first, second, third, and/or fourth material are selected from a group comprising: Polypropylene (PP), Polyamid (PA), Polyoxymethylene (POM), Polyketon (PK), Polyphthalamide (PPA), Polyphenylene sulfide (PPS) or the like.

12. A connector according to any one of the preceding claims, **characterized in that** the locking element (30; 30') is manufactured from a first material and the body (8; 8'; 8", 8‴) is manufactured from a second material, and/orthe base (31) of the locking element (30; 30') is manufactured from a third material and at least parts of the engagement arms (32a, 32b) are manufactured from a fourth material; wherein
the first material is reinforced by pressure resilient reinforcement bead components, preferably glass beads; and/or
the fourth material is reinforced by pressure resilient reinforcement bead components, preferably glass beads; and/or
the second material is reinforced by pull-resilient reinforcement fibre components, preferably glass-fibres; and/or
the third material is reinforced by pull-resilient reinforcement fibre components, preferably glass-fibres.

13. A connector according to either claim 11 or 12, **characterized in that** the locking element (30; 30') is formed integrally from the third and fourth material, and, preferably, the locking element (30; 30') is formed integrally from the third and fourth material by multi-component injection moulding.

14. A connector accordingto any one of the preceding claims, comprising a handle (35) connected to the base of the locking element (30; 30'), such that when the locking element is located in the slot (11), the handle (35) protrudes from the slot (11).

15. A connector according to claim 14, **characterized in that** the connecting portion (35a) of the handle (35) with the base (31) is provided with one or more breaking points to facilitate separation of the handle (35) and the base (31) of the locking element (30; 30').

16. A connector according to any one of the preceding claims, **characterized in that** the locking element (30; 30') comprises a strap (50) connecting the locking element (30; 30') and the body (8) of the connector.

17. A connector according to claim 1, wherein
the first fluid conduit (10) is a tube; and
once the locking element (30; 30') is inserted into the slot (11), and when the end of the first fluid conduit (10) is received by the aperture of the body (8; 8'; 8", 8‴), the engagement arms (32a, 32b) are retained by the internal surface of the slot (11) so as to at least partially surround the first fluid conduit (10);
wherein the engagement arms (32a, 32b) are deformed into substantially a ring that partially or fully surrounds a circumference of the first fluid conduit (10).

18. A connector according to claim 17, wherein, during a connection process of connecting the first fluid conduit (10) to the connector, the engagement arms (32a, 32b) are deformed in a tangential direction by an internal surface of the slot (11) and towards the surface of the end of the first fluid conduit (10).

## Patentansprüche

1. Verbinder zum Herstellen einer Fluidverbindung zwischen mindestens einer ersten Fluidleitung (10) und einer zweiten Fluidleitung (20), wobei der Verbinder Folgendes aufweist:
einen Körper (8; 8'; 8", 8‴), der mindestens eine Öffnung definiert, die zur Aufnahme eines Endes der ersten Fluidleitung (10) konfiguriert ist;
ein Verriegelungselement (30; 30'), das eine Basis (31) und ein Paar davon ausgehender Eingriffsarme (32a, 32b) aufweist, wobei die Eingriffsarme (32a, 32b) zur Unterbringung des Endes der ersten Fluidleitung (10) dazwischen konfiguriert sind;
wobei das Verriegelungselement (30; 30') dazu konfiguriert ist, mindestens teilweise von einem durch den Körper (8; 8'; 8", 8‴) definierten Schlitz (11) aufgenommen zu werden und, wenn das Ende der ersten Fluidleitung (10) innerhalb des Körpers (8; 8'; 8", 8‴) des Verbinders angeordnet ist, mit der ersten Fluidleitung (10) zusammenzugreifen, um einem Herausziehen der ersten Fluidleitung (10) aus dem Verbinder zu widerstehen;
**dadurch gekennzeichnet, dass**
die beiden Eingriffsarme (32a, 32b) flexible Eingriffsarme sind,
der Schlitz (11) teilweise durch innere Führungsflächen (11a, 11b) des Körpers (8; 8'; 8", 8‴) des Verbinders definiert ist, die gekrümmt und konkav zu der ersten Fluidleitung (10) sind und dazu konfiguriert sind, die Eingriffsarme (32a, 32b) gegen die erste Fluidleitung (10) in Position zu halten, und
wenn das Verriegelungselement (30; 30') in dem Schlitz (11) angeordnet ist und das Ende der ersten Fluidleitung (10) in dem Körper (8; 8'; 8", 8‴) des Verbinders angeordnet ist, die Eingriffsarme (32a, 32) gegen die erste Fluidleitung (10) gehalten werden und solche jeweiligen Längen aufweisen, dass das Verriegelungselement (30; 30') die erste Fluidleitung (10) mindestens teilweise umgibt.

2. Verbinder nach Anspruch 1, bei dem das Verriegelungselement (30; 30') dazu konfiguriert ist, die erste Fluidleitung (10) mindestens teilweise um einen Winkel von mindestens 200°, mindestens 250°, mindestens 270°, mindestens 300°, mindestens 320°, mindestens 330°, mindestens 340° oder zwischen 340° und 350° (einschließlich) oder zwischen 350° und 355° (einschließlich) oder zwischen 355° und 360° (einschließlich) zu umgeben.

3. Verbinder nach einem der vorhergehenden Ansprüche, bei dem während eines Verbindungsvorgangs des Verbindens der ersten Fluidleitung (10) mit dem Verbinder die Eingriffsarme (32a, 32b) in einer tangentialen Richtung durch eine innere Oberfläche des Schlitzes (11) und in Richtung der Oberfläche des Endes der ersten Fluidleitung (10) verformt werden.

4. Verbinder nach einem der vorhergehenden Ansprüche, bei dem die Eingriffsarme (32a, 32) elastisch und dazu konfiguriert sind, beim Einführen durch die erste Fluidleitung (10) in den Schlitz gespreizt zu werden und, sobald sie in dem Schlitz (11) angeordnet sind, eine solche Konfiguration anzunehmen, dass die Eingriffsarme (32a, 32) mit der ersten Fluidleitung (10) in Kontakt stehen.

5. Verbinder nach einem der vorhergehenden Ansprüche, wobei der Körper (8) des Verbinders mit der zweiten Fluidleitung (20) einstückig ist oder alternativ der Körper (8) des Verbinders dazu konfiguriert ist, mit der zweiten Fluidleitung (20) in Gewindeeingriff zu stehen.

6. Verbinder nach einem der Ansprüche 1 bis 4, wobei der Körper (8"; 8‴) des Verbinders eine zweite Öffnung, die zur Aufnahme eines Endes der zweiten Fluidleitung (20) konfiguriert ist, einen durch den Körper (8"; 8‴) definierten zweiten Schlitz (11') und ein zweites Verriegelungselement (30') mit einer zweiten Basis (31') und einem zweiten Paar davon ausgehender Eingriffsarme aufweist, die zur Unterbringung des Endes derzweiten Fluidleitung (20) dazwischen konfiguriert sind;
wobei das zweite Verriegelungselement (30') dazu konfiguriert ist, mindestens teilweise von dem zweiten Schlitz (11') aufgenommen zu werden und, wenn das Ende derzweiten Fluidleitung (20) innerhalb des Körpers (8"; 8‴) angeordnet ist, mit der zweiten Fluidleitung (20) zusammenzugreifen, um ein Herausziehen der zweiten Fluidleitung (20) aus dem Körper (8"; 8‴) zu verhindern.

7. Verbinder nach einem der vorhergehenden Ansprüche, bei dem das Verriegelungselement dazu konfiguriert ist, mit einem äußeren Flansch oder Vorsprung (21) der ersten Fluidleitung (10) in der Nähe des Endes der ersten Fluidleitung (10) in Eingriff zu treten, wobei der Eingriff des Verriegelungselements und des Flansches oder Vorsprungs (21) einem Herausziehen der ersten Fluidleitung (10) aus dem Körper (8; 8'; 8", 8‴) des Verbinders widersteht.

8. Verbinder nach einem der vorhergehenden Ansprüche, **dadurch gekennzeichnet, dass** das Verriegelungselement (30; 30'), wenn es in dem Schlitz (11) angeordnet ist, sich vollständig innerhalb des Schlitzes (11) befindet.

9. Verbinder nach einem der vorhergehenden Ansprüche, **dadurch gekennzeichnet, dass** das Verriegelungselement (30; 30') Schnappverriegelungselemente (36a, 36b) aufweist und der Schlitz komplementäre Ausnehmungen (12a, 12b) zur Aufnahme von Schnappverriegelungselementen (36a, 36b) enthält, so dass, wenn das Verriegelungselement (30; 30') in dem Schlitz (11) angeordnet ist, die Schnappverriegelungselemente (36a, 36b) von den jeweiligen Ausnehmungen (12a, 12b) aufgenommen werden und mit diesen zusammengreifen.

10. Verbinder nach einem der vorhergehenden Ansprüche, **dadurch gekennzeichnet, dass** das Verriegelungselement (30; 30') ferner Aussparungen (39a, 39b) aufweist, die auf mindestens einem Abschnitt der äußeren (33a, 33b) und/oder inneren (34a, 34b) Oberfläche der Eingriffsarme (32a, 32b) angeordnet sind.

11. Verbinder nach einem der vorhergehenden Ansprüche, **dadurch gekennzeichnet, dass** das Verriegelungselement (30; 30') aus einem ersten Material hergestellt ist und der Körper (8; 8'; 8", 8‴) aus einem zweiten Material hergestellt ist, und/oder die Basis (31) des Verriegelungselements (30; 30') aus einem dritten Material hergestellt ist und mindestens Teile der Eingriffsarme (32a, 32b) aus einem vierten Material hergestellt sind, und wobei das erste, zweite, dritte und/oder vierte Material aus einer Gruppe ausgewählt ist, die Folgendes umfasst: Polypropylen (PP), Polyamid (PA), Polyoxymethylen (POM), Polyketon (PK), Polyphthalamid (PPA), Polyphenylensulfid (PPS) oder dergleichen.

12. Verbinder nach einem der vorhergehenden Ansprüche, **dadurch gekennzeichnet, dass** das Verriegelungselement (30; 30') aus einem ersten Material hergestellt ist und der Körper (8; 8'; 8", 8‴) aus einem zweiten Material hergestellt ist und/oder die Basis (31) des Verriegelungselements (30; 30') aus einem dritten Material hergestellt ist und mindestens Teile der Eingriffsarme (32a, 32b) aus einem vierten Material hergestellt sind; wobei
das erste Material durch druckelastische Verstärkungskugelkomponenten, vorzugsweise Glaskügelchen, verstärkt ist und/oder
das vierte Material durch druckelastische Verstärkungskugelkomponenten, vorzugsweise Glaskügelchen, verstärkt ist und/oder
das zweite Material durch zugelastische Verstärkungsfaserkomponenten, vorzugsweise Glasfasern, verstärkt ist und/oder
das dritte Material durch zugelastische Verstärkungsfaserkomponenten, vorzugsweise Glasfasern, verstärkt ist.

13. Verbinder nach Anspruch 11 oder 12, **dadurch gekennzeichnet, dass** das Verriegelungselement (30; 30') einstückig aus dem dritten und dem vierten Material gebildet ist und dass vorzugsweise das Verriegelungselement (30; 30') durch Mehrkomponentenspritzgie-ßen einstückig aus dem dritten und dem vierten Material geformt ist.

14. Verbinder nach einem der vorhergehenden Ansprüche, der einen Griff (35) aufweist, welcher mit der Basis des Verriegelungselements (30; 30') verbunden ist, so dass, wenn das Verriegelungselement in dem Schlitz (11) angeordnet ist, der Griff (35) aus dem Schlitz (11) herausragt.

15. Verbinder nach Anspruch 14, **dadurch gekennzeichnet, dass** der Verbindungsabschnitt (35a) des Griffs (35) mit der Basis (31) mit einer oder mehreren Sollbruchstellen versehen ist, um die Trennung des Griffs (35) und der Basis (31) des Verriegelungselements (30; 30') zu erleichtern.

16. Verbinder nach einem der vorhergehenden Ansprüche, **dadurch gekennzeichnet, dass** das Verriegelungselement (30; 30') einen Riemen (50) aufweist, der das Verriegelungselement (30; 30') und den Körper (8) des Verbinders verbindet.

17. Verbinder nach Anspruch 1, bei dem
die erste Fluidleitung (10) ein Rohr ist und
sobald das Verriegelungselement (30; 30') in den Schlitz (11) eingeführt ist und wenn das Ende der ersten Fluidleitung (10) von der Öffnung des Körpers (8; 8'; 8", 8‴) aufgenommen ist, die Eingriffsarme (32a, 32b) von der inneren Oberfläche des Schlitzes (11) gehalten werden, so dass sie die erste Fluidleitung (10) mindestens teilweise umgeben;
wobei die Eingriffsarme (32a, 32b) im Wesentlichen zu einem Ring verformt sind, der einen Umfang der ersten Fluidleitung (10) teilweise oder vollständig umgibt.

18. Verbinder nach Anspruch 17, bei dem während eines Verbindungsvorgangs des Verbindens der ersten Fluidleitung (10) mit dem Verbinder die Eingriffsarme (32a, 32b) in einer tangentialen Richtung durch eine innere Oberfläche des Schlitzes (11) und in Richtung der Oberfläche des Endes der ersten Fluidleitung (10) verformt werden.

## Revendications

1. Connecteur destiné à former une connexion fluide entre au moins un premier conduit à fluide (10) et un second conduit à fluide (20), le connecteur comprenant :
un corps (8 ; 8' ; 8", 8‴) définissant au moins une ouverture configurée afin de recevoir une extrémité du premier conduit à fluide (10) ;
un élément de verrouillage (30 ; 30') comprenant une base (31) et une paire de bras d'engagement (32a, 32b) s'étendant à partir de celle-ci, les bras d'engagement (32a, 32b) étant configurés afin d'adapter l'extrémité du premier conduit à fluide (10) entre eux ;
l'élément de verrouillage (30 ; 30') étant configuré afin d'être réceptionné au moins partiellement par une fente (11) définie par le corps (8 ; 8' ; 8", 8‴) et lorsque l'extrémité du premier conduit à fluide (10) est située à l'intérieur du corps (8 ; 8' ; 8", 8‴) du connecteur,
afin d'engager le premier conduit à fluide (10) de manière à résister au retrait du premier conduit à fluide (10) du connecteur;
**caractérisé en ce que**
les deux bras d'engagement (32a, 32b) sont des bras d'engagement flexible,
la fente (11) est définie en partie par des surfaces de guidage intérieures (11a, 11b) du corps (8 ; 8' ; 8", 8‴) du connecteur qui sont incurvées et concaves par rapport au premier conduit à fluide (10) et sont configurées afin de maintenir les bras d'engagement (32a, 32b) en position contre le premier conduit à fluide (10), et
lorsque l'élément de verrouillage (30 ; 30') est situé dans la fente (11) et que l'extrémité du premier conduit à fluide (10) est située dans le corps (8 ; 8' ; 8", 8‴) du connecteur, les bras d'engagement (32a, 32) sont retenus contre le premier conduit à fluide (10) et possèdent des longueurs respectives de sorte que l'élément de verrouillage (30 ; 30') entoure au moins partiellement le premier conduit à fluide (10).

2. Connecteur selon la revendication 1, dans lequel l'élément de verrouillage (30 ; 30') est configuré afin d'entourer au moins partiellement le premier conduit à fluide (10) par un angle d'au moins 200°, d'au moins 250°, d'au moins 270°, d'au moins 300°, d'au moins 320°, d'au moins 330°, d'au moins 340°, ou entre 340° et 350° (inclus) ou entre 350° et 355° (inclus), ou entre 355° et 360° (inclus).

3. Connecteur selon une quelconque des revendications précédentes, dans lequel, pendant un processus de connexion connectant le premier conduit à fluide (10) au connecteur, les bras d'engagement (32a, 32b) sont déformés dans une direction tangentielle par une surface interne de la fente (11) et vers la surface de l'extrémité du premier conduit à fluide (10).

4. Connecteur selon une quelconque des revendications précédentes, dans lequel les bras d'engagement (32a, 32) sont résistants et configurés afin d'être écartés lorsqu'ils sont insérés dans la fente (11) par le premier conduit à fluide (10) et d'adopter une configuration une fois qu'ils sont situés dans la fente (11) de sorte que les bras d'engagement (32a, 32) entrent en contact avec le premier conduit à fluide (10).

5. Connecteur selon une quelconque des revendications précédentes, dans lequel le corps (8) du connecteur est solidaire du second conduit à fluide (20) ou, en alternative, le corps (8) du connecteur est configuré afin de s'engager par filetage dans le second conduit à fluide (20).

6. Connecteur selon une quelconque des revendications 1 à 4, dans lequel le corps (8" ; 8‴) du connecteur comprend au moins une seconde ouverture configurée afin de recevoir une extrémité du second conduit à fluide (20), une seconde fente (11') définie par le corps (8" ; 8‴), et un second élément de verrouillage (30') comprenant une seconde base (31') et une second paire de bras d'engagement s'étendant à partir d'elle et configurés afin d'adapter l'extrémité du second conduit à fluide (20) entre eux ;
dans lequel le second élément de verrouillage (30') est configuré afin d'être réceptionné au moins partiellement par la seconde fente (11') et, lorsque l'extrémité du second conduit à fluide (20) est situé à l'intérieur du corps (8" ; 8‴), afin d'engager le second conduit à fluide (20) de manière à résister au retrait du second conduit à fluide (20) du corps (8" ; 8"').

7. Connecteur selon une quelconque des revendications précédentes, dans lequel l'élément de verrouillage est configuré afin d'entrer dans une bride ou une projection externe (21) du premier conduit à fluide (10) proche de l'extrémité du premier conduit à fluide (10), dans lequel l'engagement de l'élément de verrouillage et la bride ou la projection (21) résiste au retrait du premier conduit à fluide (10) du corps (8 ; 8' ; 8", 8‴) du connecteur.

8. Connecteur selon une quelconque des revendications précédentes, **caractérisé en ce que** lorsqu'il est situé dans la fente (11), l'élément de verrouillage (30 ; 30') est entièrement à l'intérieur de la fente (11).

9. Connecteur selon une quelconque des revendications précédentes, **caractérisé en ce que** l'élément de verrouillage (30 ; 30') comprend des éléments à cliquets (36a, 36b) et la fente comporte des renfoncements complémentaires (12a, 12b) en vue de la réception des éléments à cliquets (36a, 36b), de sorte que l'élément de verrouillage (30 ; 30') est situé dans la fente (11), les éléments à cliquets (36a, 36b) sont réceptionnés par les renfoncements respectifs (12a, 12b) et s'y engagent.

10. Connecteur selon une quelconque des revendications précédentes, **caractérisé en ce que** l'élément de verrouillage (30 ; 30') comprend par ailleurs des crans (39a, 39b) disposés respectivement sur au moins une section de la surface extérieure (33a, 33b) et/ou extérieure (34a, 34b) des bras d'engagement (32a, 32b).

11. Connecteur selon une quelconque des revendications précédentes, **caractérisé en ce que** l'élément de verrouillage (30 ; 30') est fabriqué à partir d'une première matière et **en ce que** le corps (8 ; 8' ; 8", 8‴) est fabriqué à partir d'une seconde matière, et/ou la base (31) de l'élément de verrouillage (30 ; 30') est fabriqué à partir d'une troisième matière et **en ce qu'**au moins des parties des bras d'engagement (32a, 32b) sont fabriquées à partir d'une quatrième matière, et dans lequel la première, la deuxième, la troisième et/ou la quatrième matière sont sélectionnées à partir d'un groupe comprenant : le polypropylène (PP), le polyamide (PA), le polyoxyméthylène (POM), la polycétone (PK), le polyphthalamide (PPA), le polyphénylène-sulfide (PPS) ou similaires.

12. Connecteur selon une quelconque des revendications précédentes, **caractérisé en ce que** l'élément de verrouillage (30 ; 30') est fabriqué à partir d'une première matière et le corps (8 ; 8' ; 8", 8‴) est fabriqué à partir d'une seconde matière, et/ou la base (31) l'élément de verrouillage (30 ; 30') est fabriquée à partir d'une troisième matière et au moins des parties des bras d'engagement (32a, 32b) sont fabriquées à partir d'une quatrième matière ; dans lequel
le premier matériau est renforcé par des composants en perles de renforcement résistants à la pression, de préférence des perles de verre ; et/ou
le quatrième matériau est renforcé par des composants en perles de renforcement résistants à la pression, de préférence des perles de verre ; et/ou
le second matériau est renforcé par des composants en fibres de renforcement résistants à la traction, de préférence des fibres de verre ; et/ou
le troisième matériau est renforcé par des composants en fibres de renforcement résistants à la traction, de préférence des fibres de verre.

13. Connecteur selon soit la revendication 11, soit la 12, **caractérisé en ce que** l'élément de verrouillage (30 ; 30') est formé intégralement à partir de la troisième et de la quatrième matière, et de préférence, l'élément de verrouillage (30 ; 30') est formé intégralement à partir de la troisième et de la quatrième matière par moulage par injection multicomposants.

14. Connecteur selon une quelconque des revendications précédentes, comprenant une poignée (35) connectée à la base de l'élément de verrouillage (30 ; 30'), de sorte que lorsque l'élément de verrouillage est situé dans la fente (11), la poignée (35) dépasse de la fente (11).

15. Connecteur selon la revendication 14, **caractérisé en ce que** la partie de connexion (35a) de la poignée (35) à la base (31) est dotée d'un ou plusieurs points de rupture afin de faciliter la séparation de la poignée (35) et de la base (31) de l'élément de verrouillage (30 ; 30').

16. Connecteur selon une quelconque des revendications précédentes, **caractérisé en ce que** l'élément de verrouillage (30 ; 30') comprend une courroie (50) connectant l'élément de verrouillage (30 ; 30') et le corps (8) du connecteur.

17. Connecteur selon la revendication 1, dans lequel
le premier conduit à fluide (10) est un tube ; et
une fois que l'élément de verrouillage (30 ; 30') est inséré dans la fente (11) et que l'extrémité du premier conduit de fluide (10) est reçue par l'ouverture du corps (8 ; 8' ; 8", 8‴), les bras d'engagement (32a, 32b) sont retenus par la surface interne de la fente (11) de manière à entourer au moins partiellement le premier conduit de fluide (10) ;
dans lequel les bras d'engagement (32a, 32b) sont déformés sensiblement en un anneau qui entoure notablement ou entièrement la circonférence du premier conduit à fluide (10).

18. Connecteur selon la revendication 17, dans lequel, pendant un processus de connexion du premier conduit à fluide (10) au connecteur, les bras d'engagement (32a, 32b) sont déformés dans une direction tangentielle par une surface interne de la fente (11) et vers la surface de l'extrémité du premier conduit de fluide (10).
